# EUROPEAN PATENT SPECIFICATION

(11) **EP 4 538 483 B1**
(45) Date of publication and mention of the grant of the patent: **25.11.2026**
(21) Application number: 23928285.8
(22) Date of filing: 04.09.2023
(51) Int. Cl.: E04H 4/16, B08B 9/08

(54) **POOL ROBOT**
SCHWIMMBECKENROBOTER
ROBOT DE PISCINE

(30) Priority: 20.03.2023 CN 202310269067
(43) Date of publication of application: 16.04.2025
(73) Proprietor: Xingmai Innovation Technology (Suzhou) Co., Ltd., Suzhou, Jiangsu 215124 (CN)
(72) Inventor: ZHANG, Shilei, Suzhou, Jiangsu 215124 (CN)
(74) Representative: Huang, Liwei
(86) International application number: PCT/CN2023/116840
(87) International publication number: WO 2024/192980

(56) References cited:
- CN-A- 101 597 963
- CN-A- 115 324 395
- CN-A- 116 060 396
- CN-U- 205 805 047
- CN-U- 205 805 047
- CN-U- 208 380 175
- CN-U- 213 049 697
- CN-U- 218 306 593
- US-A- 5 105 496
- US-A1- 2016 168 872
- US-A1- 2020 095 792
- US-B1- 10 294 686

## Description

### TECHNICAL FIELD

The present inventionrelates to the technical field of pool working devices, and in particular, to a pool robot.

### BACKGROUND

As an automatic device working in a pool, a pool robot can automatically complete work such as pool cleaning, thereby reducing time for a user. Therefore, the pool robot is widely praised by the user.

However, because the pool robot works in water, there are two common problems of the pool robot in the conventional technology, which greatly affect user experience but have not been resolved for a long time. First, when the pool robot is in water, there is a large amount of water inside the pool robot, so it is necessary to take significant effort to extract the pool robot from the water. Second, after the pool robot is extracted from a water surface, the water inside the pool robot needs to be drained, but a drainage speed is slow.

For example, CN205805047U discloses a debris retaining structure of underwater cleaning robot including a drainage duct in communication with the pool and the debris container; US20160168872A1 discloses a pool cleaner having an intake opening at the bottom of the body and two rollers on either side of the intake opening on which the pool cleaner rests and traverse the pool floor; US20200095792A1, EP1915496B1 and CN20770775U each disclose a pool cleaner including a housing, a cavity defined within the housing, and a removable debris container received within the cavity, however, none of them has solved the above mentioned problems.

### SUMMARY

An objective of the present invention is to propose a pool robot, which can improve a drainage speed of the pool robot in a process of leaving water, quickly reduce a weight of the pool robot, and therefore help improve user experience.

The invention is set out in the appended set of claims.

To achieve the objective, the present invention uses the following technical solutions. A pool robot according to appended claim 1 is provided.

In an optional solution, the water baffle plate is made of a flexible waterproof material.

In an optional solution, when the pool robot is in water, the water baffle plate is attached to an outer side of the side wall under the action of water pressure inside and outside the second water outlet hole, so that the second water outlet hole is closed, and in the process in which the pool robot is leaving the water, the water baffle plate is located lower than the filtering box, and the water baffle plate is opened under a force of gravity of the water.

In an optional solution, the water baffle plate includes:
a body provided over the second water outlet hole; and
a rotating shaft disposed between the side wall and the body, where the rotating shaft is located at an upper side of the second water outlet hole, and the body is rotatably connected to the rotating shaft.

In an optional solution, a surface area of the water baffle plate facing the second water outlet hole is greater than an area of the second water outlet hole, and a part of perimetrical boundary of the water baffle plate is connected to the side wall.

In an optional solution, the second water outlet hole is close to the lower end surface of the housing. In an optional solution, the pool robot further includes:
a filter member disposed on an inner wall of the filtering box, where the inner wall corresponds to the second water outlet hole.

According to the invention, an area of the first water outlet hole ranges from 2000 mm² to 6000 mm². According to the invention, the pool robot further includes:
a handle, where the handle is disposed at a front end of the housing, and when the handle is lifted, the side wall provided with the second water outlet hole tilts.

In an optional solution, in a state in which the handle is lifted, the first water outlet hole is close to a lowest point of the housing.

In an optional solution, when the handle is lifted, the lower end surface of the housing and a horizontal plane form an included angle of 45° to 75°.

According to the invention, in a state in which the handle is lifted, the first water outlet hole is located lower than the second water outlet hole.

In an optional solution, the filtering box is provided with a liquid inlet and a liquid outlet, and the pool robot further includes:
a filter driving assembly, where the filter driving assembly is configured to drive the pool robot to suck water in a pool, the water enters the filtering box through the liquid inlet, garbage remains in the filtering box after the water is filtered by the filtering box, and the filtered water is drained from the liquid outlet.

In an optional solution, there are a plurality of first water outlet holes, and the plurality of first water outlet holes are provided in an array.

In an optional solution, there are a plurality of second water outlet holes, and the plurality of second water outlet holes are provided in an array.

The present disclosure includes a pool robot, not forming part of the claimed invention, which includes:
a housing, where a lower end surface of the housing is provided with a first water outlet hole, and the housing is provided with an accommodation cavity;
a filtering box disposed in the accommodation cavity, where a side wall of the accommodation cavity is provided with a second water outlet hole; and
a water baffle plate, where a part of the water baffle plate is connected to a side of the side wall of the accommodation cavity, where the side of the side wall is away from the filtering box, the water baffle plate is provided over the second water outlet hole, when water pressure inside the second water outlet hole is less than water pressure outside the housing, the water baffle plate is attached to the side of the side wall, where the side of the side wall is away from the filtering box, and when water pressure inside the second water outlet hole is greater than water pressure outside the housing, the water baffle plate is opened, and a part of the water baffle plate, where the part is not connected to the side wall, is separated from the side wall under a force of gravity of the water, to form a gap, so that water is capable of being quickly drained from the gap.

The present disclosure includes a pool robot, not forming part of the claimed invention, which includes:
a housing, where a lower end surface of the housing is provided with a first water outlet hole, and the housing is provided with an accommodation cavity;
a filtering box disposed in the accommodation cavity, where a side wall of the accommodation cavity is provided with a second water outlet hole; and
a water baffle plate, where a part of the water baffle plate is connected to a side of the side wall of the accommodation cavity, where the side of the side wall is away from the filtering box, the water baffle plate is provided over the second water outlet hole to close or open the second water outlet hole, and when the pool robot moves to a position at which the side wall tilts, the water baffle plate is opened, and water in the filtering box flows out through the second water outlet hole and is drained from the housing through the first water outlet hole.

### BRIEF DESCRIPTION OF DRAWINGS

To describe technical solutions in embodiments of the present invention more clearly, the following briefly introduces the accompanying drawings required for describing embodiments of the present invention.
FIG. 1 is a diagram 1 of a cross-sectional structure of a pool robot according to an embodiment of the present invention;
FIG. 2 is a diagram 2 of a cross-sectional structure of a pool robot according to an embodiment of the present invention;
FIG. 3 is a diagram 1 of a structure of a pool robot according to an embodiment of the present invention; and
FIG. 4 is a diagram 2 of a structure of a pool robot according to an embodiment of the present invention.

### Reference numerals:

100: housing; 110: first water outlet hole; 120: accommodation cavity; 130: second water outlet hole; 140: water inlet hole; 200: filtering box; 300: water baffle plate; 400 handle; 500: filter driving assembly.

### DESCRIPTION OF EMBODIMENTS

The following further describes the present invention with reference to the accompanying drawings and embodiments. It may be understood that the specific embodiments described herein are merely used to explain the present invention, but are not intended to limit the present invention. In addition, it should be noted that, for ease of description, only a part but not all of a structure related to the present invention is shown in the accompanying drawings.

In descriptions of the present invention, unless otherwise expressly specified and limited, the terms such as "link", "connect", and "fasten" should be understood broadly. For example, the term "connect" may indicate a fixed connection, a detachable connection, or an integral connection, may indicate a mechanical connection or an electrical connection, or may indicate a direct connection, an indirect connection implemented through an intermediate medium, or communication between internal structures of two elements or an interaction relationship between two elements. A person of ordinary skill in the art may understand specific meanings of the foregoing terms in the present invention based on a specific situation.

In the present invention, unless otherwise expressly specified and limited, that a first feature is "above" or "below" a second feature may be that the first feature may be in direct contact with the second feature, or the first feature may be in contact with the second feature through another feature between the first feature and the second feature instead of being in direct contact with the second feature. In addition, that the first feature is "above", "on", or "over" the second feature may be that the first feature is right above or obliquely above the second feature, or merely mean that a horizontal height of the first feature is greater than that of the second feature. That the first feature is "below", "underneath", or "under" the second feature may be that the first feature is right below or obliquely below the second feature, or merely mean that a horizontal height of the first feature is less than that of the second feature.

In descriptions of embodiments, an orientation or position relationship indicated by terms "above", "below", "left", "right", and the like is an orientation or position relationship based on the accompanying drawings, and is only intended to facilitate descriptions and simplify operations, but is not intended to indicate or imply that an apparatus or an element needs to have a specific orientation and be constructed and operated in a specific orientation. Therefore, such terms cannot be understood as a limitation on the present invention. In addition, the terms "first" and "second" are merely used to distinguish in description and have no special meaning.

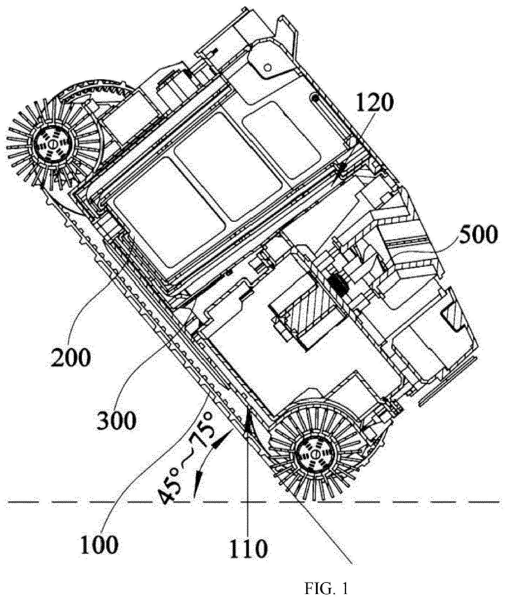

As shown in FIG. 1 to FIG. 4, an embodiment provides a pool robot, and the pool robot works in a pool. Currently, a commonly used pool robot is mainly configured to clean a bottom surface and a wall surface of a pool. The pool robot includes a housing 100 and a filtering box 200. The housing 100 is provided with an accommodation cavity 120. The filtering box 200 is disposed in the accommodation cavity 120. The pool robot further includes a filter driving assembly 500. The filtering box 200 is provided with a liquid inlet and a liquid outlet. The filter driving assembly 500 can drive the pool robot to suck water in the pool. The water enters the filtering box 200 through the liquid inlet, garbage remains in the filtering box 200 after the water is filtered by the filtering box 200, and cleaned liquid is drained from the liquid outlet.

When the pool robot works in water, water enters the housing 100 through various gaps on the housing 100. Therefore, a large amount of water remains inside a body of the pool robot. When a user lifts the pool robot out of a water surface, a weight of the pool robot is large due to a weight of the water in the housing 100, and the user needs to take significant effort to lift the body out of the water surface. After the body is lifted out of the water surface, due to a slow drainage speed of the housing 100, it takes a long time to completely drain the water in the housing 100, which is time-consuming and poor in user experience.

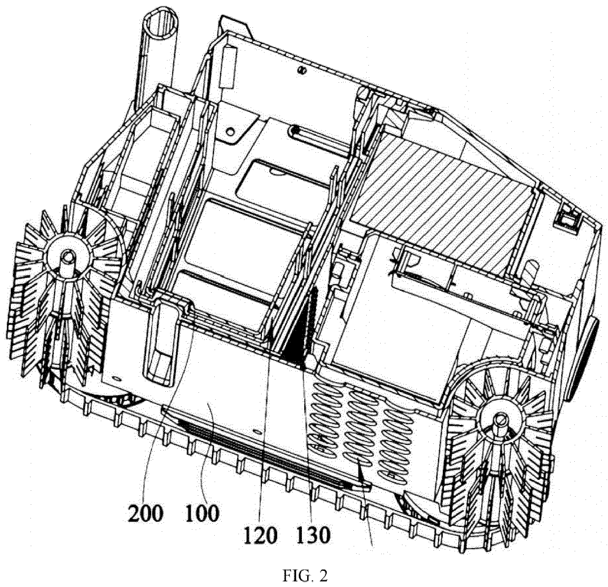

As shown in FIG. 1 and FIG. 2, in this embodiment, a lower end surface of the housing 100 is provided with a first water outlet hole 110, so that the water inside the housing 100 can be quickly drained from the first water outlet hole 110 in or after a process in which the pool robot is leaving the water (that is, leaving the water surface). A side wall of the accommodation cavity 120 is provided with a second water outlet hole 130. The pool robot further includes a water baffle plate 300. A part of the water baffle plate 300 is connected to a side of the side wall of the accommodation cavity 120, and the side of the side wall is away from the filtering box 200, that is, the water baffle plate 300 is partially connected to the side of the side wall of the accommodation cavity 120, and the side of the side wall is away from the filtering box 200. The water baffle plate 300 is provided over the second water outlet hole 130. When the pool robot is located in water, the water baffle plate 300 closes the second water outlet hole 130 to avoid the following case: Water enters the filtering box 200 through the second water outlet hole 130, affecting working efficiency of the pool robot. In or after the process in which the pool robot is leaving the water (that is, leaving the water surface), the water baffle plate 300 is opened, and water in the filtering box 200 can flow out through the second water outlet hole 130 and be drained from the housing 100 through the first water outlet hole 110, so that the water in the filtering box 200 is quickly drained. This improves a drainage speed of the pool robot in the process of leaving the water, quickly reduces the weight of the pool robot, and therefore helps improve user experience. In a process in which the pool robot enters the water, the water can enter the inside of the housing 100 through the first water outlet hole 110. This helps quickly increase the weight of the pool robot, so that the pool robot quickly enters the water, and therefore improves water entry efficiency of the pool robot.

Optionally, the water baffle plate 300 is made of a flexible waterproof material. When the pool robot is in water, the water baffle plate 300 can be attached to an outer side of the side wall under the action of water pressure inside and outside the second water outlet hole 130, so that the water in the filtering box 200 does not flow out through the second water outlet hole 130, and outside water cannot enter through the second water outlet hole 130. When the pool robot leaves the water, because the water outside the filtering box 200 is quickly drained from the first water outlet hole 110, pressure outside the filtering box 200 decreases, and the filtering box 200 drives, under a force of gravity, a part of the water baffle plate 300, where the part is not connected to the side wall, to be separated from the side wall to form a gap, so that the water is capable of being quickly drained from the gap. The water baffle plate 300 can selectively close the second water outlet hole 130 without any additional driving force. This can reduce costs and help simplify a structure of the pool robot.

In other embodiments, the water baffle plate 300 includes a body and a rotating shaft. The body is provided over the second water outlet hole 130, the rotating shaft is disposed between the side wall and the body, and the rotating shaft is located at an upper side of the second water outlet hole 130. The body is rotatably connected to the rotating shaft, so that when the pool robot leaves the water, the body can be driven to rotate under a force of gravity of the water to open the second water outlet hole 130. It should be noted that "above" herein indicates a side of the pool robot and away from the ground when the pool robot is located on the ground.

Optionally, a surface area of the water baffle plate 300 facing the second water outlet hole 130 is greater than an area of the second water outlet hole 130, so that the water baffle plate 300 can fully cover the second water outlet hole 130. Optionally, a part of perimetrical boundary of the water baffle plate 300 is connected to the side wall, that is, the perimetrical boundary of the water baffle plate 300 is intermittently connected to the side wall, so that after the pool robot leaves the water, the water in the filtering box 200 can overflow from the part of the water baffle plate 300, where the part is not connected to the side wall. Specifically, that the perimetrical boundary of the water baffle plate 300 is intermittently connected to the side wall may be that each side of the water baffle plate 300 is partially connected to the side wall, so that when the pool robot is located underwater, the water in the filtering box 200 is prevented from flowing out through the second water outlet hole 130 by using water pressure outside the side wall. However, after the pool robot leaves the water surface, the water pressure outside the water baffle plate 300 disappears. In this case, under the action of water pressure inside the filtering box 200, the part of the water baffle plate 300, where the part is not connected to the side wall, is driven to be separated from the side wall, so that the water in the filtering box 200 can flow out through the second water outlet hole 130. Certainly, that the perimetrical boundary of the water baffle plate 300 is intermittently connected to the side wall may alternatively be that at least one side of the water baffle plate 300 is connected to the side wall, the side includes at least an upper side of the water baffle plate 300, and the upper side is away from the ground, so that when the pool robot leaves the water, the side of the water baffle plate 300, where the side is not connected to the side wall, can be separated from the side wall to open the second water outlet hole 130. This helps quickly drain water and therefore ensures drainage efficiency.

In addition, as shown in FIG. 1 and FIG. 2, the second water outlet hole 130 is provided close to the lower end surface of the housing 100, so that the water in the filtering box 200 can be fully drained, and residues are reduced.

Optionally, there are a plurality of first water outlet holes 110, and the plurality of first water outlet holes 110 are provided in an array. There are a plurality of second water outlet holes 130, and the plurality of second water outlet holes 130 are arranged in an array. This helps expand a drainage area and ensure drainage stability. Optionally, the first water outlet hole 110 and the second water outlet hole 130 are circular holes or grid holes.

Optionally, the pool robot further includes a filter member. The filter member is disposed on an inner wall of the filtering box 200, and the inner wall corresponds to the second water outlet hole 130, to prevent garbage in the filtering box 200 from being carried out during drainage.

Optionally, an area of the first water outlet hole 110 ranges from 2000 mm² to 6000 mm², thereby ensuring a sufficient drainage area and improving drainage efficiency.

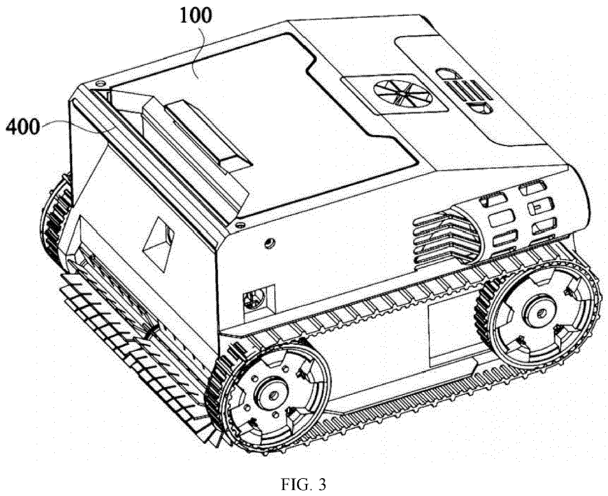

As shown in FIG. 2 and FIG. 3, the pool robot further includes a handle 400 disposed at a front end of the housing 100. This is convenient for a user to hold the pool robot. When the handle 400 is lifted, the side wall provided with the second water outlet hole 130 tilts. It should be noted that the front end is an end located in the front when the pool robot moves forward. In this way, liquid in the filtering box 200 is drained from the second water outlet hole 130 under a force of gravity. This can not only ensure the drainage efficiency, but also improve a drainage proportion, thereby preventing water from remaining in the filtering box 200.

In addition, to fully drain the water inside the housing 100, an internal structure of the pool robot does not have an obvious right angle or dead angle. This prevents the internal water from remaining and not being fully drained for a long time. Optionally, when the handle 400 is lifted, the lower end surface of the housing 100 and a horizontal plane form an included angle of 45° to 75°, so that the water naturally flows out under a force of gravity. This helps increase the drainage proportion. In this embodiment, in a state in which the handle 400 is lifted, the lower end surface of the housing 100 and a horizontal plane form the included angle of 45°.

In this embodiment, in a state in which the handle 400 is lifted, the first water outlet hole 110 is close to a lowest point of the housing 100. Because the water flows downward under a force of gravity when the user holds the handle 400 and lifts the pool robot, the first water outlet hole 110 is provided close to the lowest point of the housing 100 when the user holds the handle 400. This helps reduce water remaining inside the housing 100 and improve the drainage proportion.

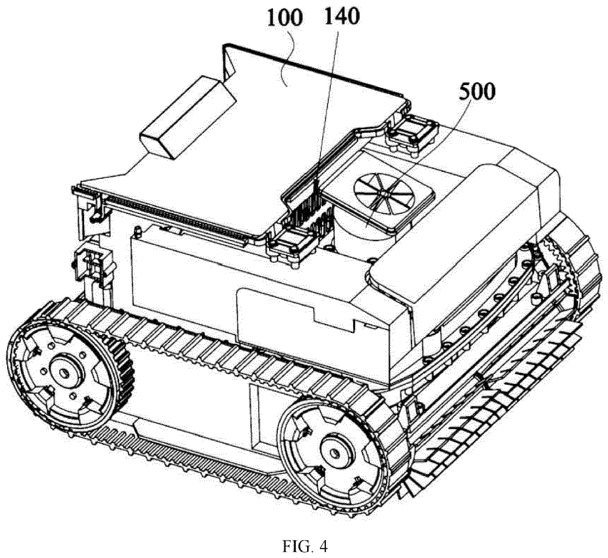

Refer to FIG. 4. Side walls of the filtering box 200 and the accommodation cavity 120 are each provided with a water inlet hole 140. The water inlet hole 140 is provided close to an upper end surface of the housing 100. When the pool robot enters water, water outside the housing 100 can enter the filtering box 200 through the water inlet hole 140. This helps quickly increase the weight of the pool robot, so that the pool robot quickly enters the water, and therefore improves the water entry efficiency of the pool robot.

Optionally, the water inlet hole 140 is a grid hole, and an opening area of the grid hole is large. This helps improve the water entry efficiency.

It can be understood that at least a part of the filter driving assembly 500 is disposed outside the water inlet hole 140. When the pool robot works in water, the filter driving assembly 500 can drive water and garbage to enter the liquid inlet of the filtering box 200. After the water and the garbage are filtered by the filtering box 200, the garbage remains in the filtering box 200, and the water is drained to the filter driving assembly 500 through the liquid outlet and the water inlet hole 140, and then is drained from the housing 100 along a preset path.

## Claims

1. A pool robot, comprising:
a housing (100) provided with an accommodation cavity (120),
a filtering box (200) disposed in the accommodation cavity (120);
a side wall of the accommodation cavity (120) is provided with a second water outlet hole (130);
the pool robot further comprises a water baffle plate (300), wherein a part of the water baffle plate (300) is connected to a side of the side wall of the accommodation cavity (120), wherein the side of the side wall is away from the filtering box (200), the water baffle plate (300) is provided over the second water outlet hole (130),
when the pool robot is located in water, the water baffle plate (300) closes the second water outlet hole (130), and
the pool robot further comprises a handle (400), wherein the handle (400) is disposed at a front end of the housing (100), so that when the handle (400) is lifted, the side wall provided with the second water outlet hole (130) tilts;
**characterized in that**
a bottom surface of the housing (100) is provided with a first water outlet hole (110), wherein an area of the first water outlet hole (110) ranges from 2000 mm² to 6000 mm²,
in a state in which the handle (400) is lifted, the first water outlet hole (110) is located lower than the second water outlet hole (130),
so that in a process in which the pool robot is leaving the water, the water baffle plate (300) is opened, and water in the filtering box (200) flows out through the second water outlet hole (130) and is drained from the housing (100) through the first water outlet hole (110).

2. The pool robot according to claim 1, wherein the water baffle plate (300) is made of a flexible waterproof material.

3. The pool robot according to claim 1, wherein
when the pool robot is in water, the water baffle plate (300) is attached to an outer side of the side wall under the action of water pressure inside and outside the second water outlet hole (130), so that the second water outlet hole (130) is closed, and
in the process in which the pool robot is leaving the water, the water baffle plate (300) is located lower than the filtering box (200), and the water baffle plate (300) is opened under a force of gravity of the water.

4. The pool robot according to claim 1, wherein the water baffle plate (300) comprises:
a body located over the second water outlet hole (130); and
a rotating shaft disposed between the side wall and the body, wherein the rotating shaft is located at an upper side of the second water outlet hole (130), and the body is rotatably connected to the rotating shaft.

5. The pool robot according to claim 1, wherein a surface area of the water baffle plate (300) facing the second water outlet hole (130) is greater than an area of the second water outlet hole (130), and a part of perimetrical boundary of the water baffle plate (300) is connected to the side wall.

6. The pool robot according to claim 1, wherein the second water outlet hole (130) is close to the lower end surface of the housing (100).

7. The pool robot according to claim 1, wherein in a state in which the handle (400) is lifted, the first water outlet hole (110) is close to a lowest point of the housing (100).

8. The pool robot according to claim 1, wherein when the handle (400) is lifted, the lower end surface of the housing (100) and a horizontal plane form an included angle of 45° to 75°.

9. The pool robot according to claim 1, wherein the filtering box (200) is provided with a liquid inlet and a liquid outlet, and the pool robot further comprises:
a filter driving assembly (500), wherein the filter driving assembly (500) is configured to drive the pool robot to suck water in a pool, the water enters the filtering box (200) through the liquid inlet, garbage remains in the filtering box (200) after the water is filtered by the filtering box (200), and the filtered water is drained from the liquid outlet.

10. The pool robot according to claim 9, wherein the accommodation cavity (120) is located in a front portion of the housing (100), and the filter driving assembly (500) is placed to the rear of the accommodation cavity (120).

11. The pool robot of claim 1, wherein
when water pressure inside the second water outlet hole (130) is less than water pressure outside the housing (100), the water baffle plate (300) is attached to the side of the side wall, wherein the side of the side wall is away from the filtering box (200), and
when water pressure inside the second water outlet hole (130) is greater than water pressure outside the housing (100), the water baffle plate (300) is opened, and a part of the water baffle plate (300), wherein the part is not connected to the side wall, is separated from the side wall under a force of gravity of the water, to form a gap, so that water is capable of being quickly drained from the gap.

12. The pool robot of claim 1, wherein
when the pool robot moves to a position at which the side wall tilts, the water baffle plate (300) is opened, and water in the filtering box (200) flows out through the second water outlet hole (130) and is drained from the housing (100) through the first water outlet hole (110).

## Patentansprüche

1. Schwimmbeckenroboter, umfassend:
ein Gehäuse (100), das mit einem Aufnahmehohlraum (120) versehen ist,
einen Filterkasten (200), der in dem Aufnahmehohlraum (120) angeordnet ist;
wobei eine Seitenwand des Aufnahmehohlraums (120) mit einem zweiten Wasserauslassloch (130) versehen ist;
wobei der Schwimmbeckenroboter ferner eine Wassersperrplatte (300) umfasst, wobei ein Teil der Wassersperrplatte (300) mit einer Seite der Seitenwand des Aufnahmehohlraums (120) verbunden ist, die Seite der Seitenwand von dem Filterkasten (200) abgewandt ist und die Wassersperrplatte (300) über dem zweiten Wasserauslassloch (130) bereitgestellt ist,
wobei die Wassersperrplatte (300) das zweite Wasserauslassloch (130) verschließt, wenn sich der Schwimmbeckenroboter in Wasser befindet, und
der Schwimmbeckenroboter ferner einen Griff (400) umfasst, wobei der Griff (400) an einem vorderen Ende des Gehäuses (100) angeordnet ist, sodass sich, wenn der Griff (400) angehoben wird, die mit dem zweiten Wasserauslassloch (130) versehene Seitenwand neigt;
**dadurch gekennzeichnet, dass**
eine Bodenfläche des Gehäuses (100) mit einem ersten Wasserauslassloch (110) versehen ist, wobei eine Fläche des ersten Wasserauslasslochs (110) in einem Bereich von 2000 mm² bis 6000 mm² liegt,
sich in einem Zustand, in dem der Griff (400) angehoben ist, das erste Wasserauslassloch (110) niedriger als das zweite Wasserauslassloch (130) befindet,
sodass bei einem Prozess, bei dem der Schwimmbeckenroboter das Wasser verlässt, die Wassersperrplatte (300) geöffnet wird und Wasser in dem Filterkasten (200) durch das zweite Wasserauslassloch (130) herausfließt und durch das erste Wasserauslassloch (110) aus dem Gehäuse (100) abgelassen wird.

2. Schwimmbeckenroboter nach Anspruch 1, wobei die Wassersperrplatte (300) aus einem flexiblen wasserdichten Material hergestellt ist.

3. Schwimmbeckenroboter nach Anspruch 1, wobei,
wenn sich der Schwimmbeckenroboter in Wasser befindet, die Wassersperrplatte (300) unter Einwirkung von Wasserdruck innerhalb und außerhalb des zweiten Wasserauslasslochs (130) an einer Außenseite der Seitenwand anliegt, sodass das zweite Wasserauslassloch (130) verschlossen ist, und
bei dem Prozess, bei dem der Schwimmbeckenroboter das Wasser verlässt, die Wassersperrplatte (300) niedriger liegt als der Filterkasten (200) und die Wassersperrplatte (300) unter einer Gewichtskraft des Wassers geöffnet wird.

4. Schwimmbeckenroboter nach Anspruch 1, wobei die Wassersperrplatte (300) Folgendes umfasst:
einen Körper, der sich über dem zweiten Wasserauslassloch (130) befindet; und
eine Drehwelle, die zwischen der Seitenwand und dem Körper angeordnet ist, wobei sich die Drehwelle an einer oberen Seite des zweiten Wasserauslasslochs (130) befindet und der Körper drehbar mit der Drehwelle verbunden ist.

5. Schwimmbeckenroboter nach Anspruch 1, wobei ein dem zweiten Wasserauslassloch (130) zugewandter Flächeninhalt der Wassersperrplatte (300) größer als eine Fläche des zweiten Wasserauslasslochs (130) ist und ein Teil eines Umfangsrands der Wassersperrplatte (300) mit der Seitenwand verbunden ist.

6. Schwimmbeckenroboter nach Anspruch 1, wobei sich das zweite Wasserauslassloch (130) nahe der unteren Endfläche des Gehäuses (100) befindet.

7. Schwimmbeckenroboter nach Anspruch 1, wobei sich in einem Zustand, in dem der Griff (400) angehoben ist, das erste Wasserauslassloch (110) nahe einem tiefsten Punkt des Gehäuses (100) befindet.

8. Schwimmbeckenroboter nach Anspruch 1, wobei, wenn der Griff (400) angehoben ist, die untere Endfläche des Gehäuses (100) und eine horizontale Ebene einen eingeschlossenen Winkel von 45° bis 75° bilden.

9. Schwimmbeckenroboter nach Anspruch 1, wobei der Filterkasten (200) mit einem Flüssigkeitseinlass und einem Flüssigkeitsauslass versehen ist und der Schwimmbeckenroboter ferner umfasst:
eine Filterantriebsbaugruppe (500), wobei die Filterantriebsbaugruppe (500) dazu eingerichtet ist, den Schwimmbeckenroboter dazu anzutreiben, Wasser in einem Schwimmbecken anzusaugen, wobei das Wasser durch den Flüssigkeitseinlass in den Filterkasten (200) eintritt, Abfall in dem Filterkasten (200) verbleibt, nachdem das Wasser von dem Filterkasten (200) gefiltert wurde, und das gefilterte Wasser aus dem Flüssigkeitsauslass abgelassen wird.

10. Schwimmbeckenroboter nach Anspruch 9, wobei sich der Aufnahmehohlraum (120) in einem vorderen Abschnitt des Gehäuses (100) befindet und die Filterantriebsbaugruppe (500) hinter dem Aufnahmehohlraum (120) platziert ist.

11. Schwimmbeckenroboter nach Anspruch 1, wobei,
wenn der Wasserdruck innerhalb des zweiten Wasserauslasslochs (130) kleiner als der Wasserdruck außerhalb des Gehäuses (100) ist, die Wassersperrplatte (300) an der Seite der Seitenwand anliegt, wobei die Seite der Seitenwand von dem Filterkasten (200) abgewandt ist, und,
wenn der Wasserdruck innerhalb des zweiten Wasserauslasslochs (130) größer als der Wasserdruck außerhalb des Gehäuses (100) ist, die Wassersperrplatte (300) geöffnet ist und ein nicht mit der Seitenwand verbundener Teil der Wassersperrplatte (300) unter einer Gewichtskraft des Wassers von der Seitenwand getrennt wird, um einen Spalt zu bilden, sodass Wasser schnell aus dem Spalt ablassbar ist.

12. Schwimmbeckenroboter nach Anspruch 1, wobei,
wenn sich der Schwimmbeckenroboter in eine Position bewegt, in der sich die Seitenwand neigt, die Wassersperrplatte (300) geöffnet wird und Wasser in dem Filterkasten (200) durch das zweite Wasserauslassloch (130) herausfließt und durch das erste Wasserauslassloch (110) aus dem Gehäuse (100) abgelassen wird.

## Revendications

1. Robot de piscine, comprenant :
un boîtier (100) muni d'une cavité de logement (120),
un caisson de filtration (200) disposé dans la cavité de logement (120) ;
une paroi latérale de la cavité de logement (120) est munie d'un deuxième trou de sortie d'eau (130) ;
le robot de piscine comprend en outre une plaque déflectrice d'eau (300), dans lequel une partie de la plaque déflectrice d'eau (300) est reliée à un côté de la paroi latérale de la cavité de logement (120), dans lequel le côté de la paroi latérale est éloigné du caisson de filtration (200), la plaque déflectrice d'eau (300) est prévue au-dessus du deuxième trou de sortie d'eau (130),
lorsque le robot de piscine se trouve dans l'eau, la plaque déflectrice d'eau (300) ferme le deuxième trou de sortie d'eau (130), et
le robot de piscine comprend en outre une poignée (400), dans lequel la poignée (400) est disposée au niveau de l'extrémité avant du boîtier (100), de sorte que lorsque la poignée (400) est soulevée, la paroi latérale munie du deuxième trou de sortie d'eau (130) s'incline ;
**caractérisé en ce que**
la surface inférieure du boîtier (100) est munie d'un premier trou de sortie d'eau (110), dans lequel une aire du premier trou de sortie d'eau (110) est dans la plage de 2000 mm² à 6000 mm²,
dans un état dans lequel la poignée (400) est soulevée, le premier trou de sortie d'eau (110) est situé plus bas que le deuxième trou de sortie d'eau (130),
de sorte que, dans un processus au cours duquel le robot de piscine quitte l'eau, la plaque déflectrice d'eau (300) s'ouvre et l'eau dans le caisson de filtration (200) s'écoule par le deuxième trou de sortie d'eau (130) et est évacuée du boîtier (100) par le premier trou de sortie d'eau (110).

2. Robot de piscine selon la revendication 1, dans lequel la plaque déflectrice d'eau (300) est composée d'un matériau flexible et imperméable.

3. Robot de piscine selon la revendication 1, dans lequel
lorsque le robot de piscine est dans l'eau, la plaque déflectrice d'eau (300) est fixée à un côté extérieur de la paroi latérale sous l'action de la pression de l'eau à l'intérieur et à l'extérieur du deuxième trou de sortie d'eau (130), de sorte que le deuxième trou de sortie d'eau (130) est fermé, et
dans un processus au cours duquel le robot de piscine quitte l'eau, la plaque déflectrice d'eau (300) se trouve plus bas que le caisson de filtration (200), et la plaque déflectrice d'eau (300) s'ouvre sous la force de gravité de l'eau.

4. Robot de piscine selon la revendication 1, dans lequel la plaque déflectrice d'eau (300) comprend :
un corps situé au-dessus du deuxième trou de sortie d'eau (130) ; et
un arbre rotatif disposé entre la paroi latérale et le corps, dans lequel l'arbre rotatif est situé au niveau d'un côté supérieur du deuxième trou de sortie d'eau (130), et le corps est relié de manière rotative à l'arbre rotatif.

5. Robot de piscine selon la revendication 1, dans lequel l'aire de surface de la plaque déflectrice d'eau (300) faisant face au deuxième trou de sortie d'eau (130) est supérieure à une aire du deuxième trou de sortie d'eau (130), et une partie de la limite périmétrique de la plaque déflectrice d'eau (300) est reliée à la paroi latérale.

6. Robot de piscine selon la revendication 1, dans lequel le deuxième trou de sortie d'eau (130) est proche de la surface d'extrémité inférieure du boîtier (100).

7. Robot de piscine selon la revendication 1, dans lequel, dans un état dans lequel la poignée (400) est soulevée, le premier trou de sortie d'eau (110) est proche d'un point le plus bas du boîtier (100).

8. Robot de piscine selon la revendication 1, dans lequel lorsque la poignée (400) est soulevée, la surface d'extrémité inférieure du boîtier (100) et un plan horizontal forment un angle compris entre 45° et 75°.

9. Robot de piscine selon la revendication 1, dans lequel le caisson de filtration (200) est muni d'une entrée de liquide et d'une sortie de liquide, et le robot de piscine comprend en outre :
un ensemble d'entraînement de filtre (500), dans lequel l'ensemble d'entraînement de filtre (500) est configuré pour entraîner le robot de piscine pour qu'il aspire l'eau dans une piscine, l'eau entre dans le caisson de filtration (200) par l'entrée de liquide, les déchets restent dans le caisson de filtration (200) après que l'eau a été filtrée par le caisson de filtration (200), et l'eau filtrée est évacuée par la sortie de liquide.

10. Robot de piscine selon la revendication 9, dans lequel la cavité de logement (120) se trouve dans une portion avant du boîtier (100), et l'ensemble d'entraînement de filtre (500) est placé à l'arrière de la cavité de logement (120).

11. Robot de piscine de la revendication 1, dans lequel
lorsque la pression de l'eau à l'intérieur du deuxième trou de sortie d'eau (130) est inférieure à la pression de l'eau à l'extérieur du boîtier (100), la plaque déflectrice d'eau (300) est fixée sur le côté de la paroi latérale, dans lequel le côté de la paroi latérale est éloigné du caisson de filtration (200), et
lorsque la pression de l'eau à l'intérieur du deuxième trou de sortie d'eau (130) est supérieure à la pression de l'eau à l'extérieur du boîtier (100), la plaque déflectrice d'eau (300) s'ouvre, et une partie de la plaque déflectrice d'eau (300), dans laquelle partie n'étant pas reliée à la paroi latérale, est séparée de la paroi latérale sous la force de gravité de l'eau, pour former un écart, de sorte que l'eau puisse être rapidement évacuée de l'écart.

12. Robot de piscine de la revendication 1, dans lequel
lorsque le robot de piscine se déplace vers une position au niveau de laquelle la paroi latérale s'incline, la plaque déflectrice d'eau (300) s'ouvre, et l'eau dans le caisson de filtration (200) s'écoule par le deuxième trou de sortie d'eau (130) et est évacuée du boîtier (100) par le premier trou de sortie d'eau (110).
